# EUROPÄISCHE PATENTSCHRIFT

(11) **EP 3 494 249 B1**
(45) Veröffentlichungstag und Bekanntmachung des Hinweises auf die Patenterteilung: **21.08.2024**
(21) Anmeldenummer: 17749121.4
(22) Anmeldetag: 20.07.2017
(51) Int. Cl.: D01F 2/00, B60C 9/00, D02G 3/48, D01F 2/06, D01D 4/02

(54) **VERSTÄRKUNGSMATERIAL FÜR GUMMIANORDNUNGEN, INSBESONDERE IN FORM EINER REIFENCORDKONSTRUKTION UND VERFAHREN ZU SEINER HERSTELLUNG**
REINFORCING MATERIAL FOR RUBBER ASSEMBLIES, IN PARTICULAR IN THE FORM OF A TIRE CORD CONSTRUCTION AND METHOD FOR THE PRODUCTION THEREOF
MATÉRIAU DE RENFORT POUR SYSTÈMES EN CAOUTCHOUC, EN PARTICULIER SOUS LA FORME D'UNE STRUCTURE DE CÂBLÉ ET SON PROCÉDÉ DE FABRICATION

(30) Priorität: 05.08.2016 DE 102016009570
(43) Veröffentlichungstag der Anmeldung: 12.06.2019
(73) Patentinhaber: Indorama Ventures Mobility Luxembourg S.A., 8452 Steinfort (LU)
(72) Erfinder: MÜLLER, Bernhard, 2500 Baden (AT); KÖNIG, Roman, 3385 Prinzersdorf (AT)
(74) Vertreter: CPW GmbH
(86) Internationale Anmeldenummer: PCT/EP2017/000888
(87) Internationale Veröffentlichungsnummer: WO 2018/024362

(56) Entgegenhaltungen:
- WO-A1-2014/118082
- DE-A1- 102012 100 033
- US-A- 3 038 779

## Beschreibung

Die Erfindung betrifft ein Verstärkungsmaterial für Gummianordnungen, insbesondere in Form einer Reifencordkonstruktion sowie Verfahren zu seiner Herstellung.

Derartige Verstärkungsmaterialien sind gut bekannt. So werden beispielsweise Korde mit cellulosischen Multifilamentfasern in Form von Single End Cords (SEC) oder textilen Flächengebilden enthaltend cellulosische Korde zur Armierung von Reifen, insbesondere High- und Ultra-High-Performance-Reifen, sowie in Material Rubber Goods, wie etwa Schläuchen und Förderbändern eingesetzt, die hohen mechanischen Belastungen ausgesetzt sind.

Dazu sind in der industriellen Anwendung beispielsweise cellulosische Multifilamentgarne mit einer Festigkeit von 40 cN/tex oder höher und-einer Faserstärke (Kapillartiter, Einzelfilamenttiter) um 1,8 d/tex etabliert, etwa in Form von Standardtitern 1840 dtex mit 1000 Einzelfilamenten (siehe Cordenka^{®} RT700 oder Glanzstoff Bohemia s.r.o. Viscord CS3).

Um sich für die beabsichtigten Anwendungsfälle zu eignen, sollten Verstärkungsmaterialien ein gutes Ermüdungsverhalten (fatigue) aufzeigen, wobei sich das Ermüdungsverhalten beispielsweise durch sogenannte Shoe-shine fatigue-Messungen relativ zu einer Referenz bestimmen lässt.

In WO 2012/017034 wird zum Erreichen eines verbesserten Ermüdungsverhaltens vorgeschlagen, Multifasern mit einem deutlich höheren nominalen Einzelfilamenttiter als die o.a. Produkte zu verwenden, nämlich mit Werten von bevorzugt größer als 4 dtex (Fig. 1 dieses Dokuments). Als Referenz werden in dieser Schrift Multifilamentgarne mit Einzelfilamenttitern von kleiner 2,0 dttex herangezogen, und zur Herstellung der in dieser Schrift beschriebenen Multifilamentgarne mit höherem Einzelfilamenttiter bei gleichzeitig hoher Festigkeit wird die Anzahl der Löcher der Spinndüse reduziert und der Düsenlochdurchmesser so angepasst, dass trotz höherem Massedurchfluss die Ausspritzgeschwindigkeit vergleichbar zum Herstellungsverfahren der Referenzgarne bleibt, bei identischem Gesamtmassedurchfluss.

Der Erfindung liegt die Aufgabe zugrunde, Verstärkungsmaterialien der eingangs genannten Art weitergehend zu verbessern, insbesondere hinsichtlich einer guten Vereinbarkeit von hohen Festigkeiten und einem in deren Anwendung hohen Ermüdungswiderstand.

WO 2014/118082 A1 offenbart dünne und umweltfreundlich gestaltet und behandelte Verstärkungslagen für Reifencord, die durch eine Kombination aus Kristallinitätsgrad, Garntiter und Zugfestigkeit erreicht wird.

DE 10 2012 100 033 A1 betrifft Festigkeitsträger für Reifencord, mit dem dadurch verstärkte Reifen eine gute Hochgeschwindigkeitshaltbarkeit und eine hohe Dauerhaltbarkeit erreichen, indem der Feuchtigkeitsgehalt an Wasser zwischen unvulkanisiertem Reifenrohling und gedipptem Cord nach Vulkanisation des Reifenrohlings unterschiedlich ist und ein bestimmter Schrumpf angestrebt wird.

US 3,038,779 offenbart Stapelfasermischungen für Teppiche, Kleidungen und dekorative Stoffe mit unterschiedlichen Einzeltitern, deren Unterschiede im Krimp dennoch reduziert werden, indem herangezogene Spinndüsen relativ zueinander unterschiedliche Lochdurchmesser aufweisen. Der Erfindung liegt die Aufgabe zugrunde, Verstärkungsmaterialien der eingangs genannten Art weitergehend zu verbessern, insbesondere einer guten Vereinbarkeit von hohen Festigkeiten und einem in deren Anwendung hohen Ermüdungswiderstand.

Diese Aufgabe wird durch eine Weiterbildung des Verstärkungsmaterials der eingangs genannten Art mit den Merkmalen von Anspruch 1 erreicht, bei dem die enthaltene cellulosische Multifaser u.a.
durch eine Festigkeit im konditionierten Zustand von 35cN/tex oder höher und durch einen eine durch Abweichung der Verteilung ihrer Einzelfaserstärke von einer scharfen Zentrierung um einen einzelnen Faserstärkenwert erzeugte strukturelle Inhomogenität aufweisenden Aufbau gekennzeichnet ist.

Durch die erfindungsgemäße Vorsehung der strukturellen Inhomogenität innerhalb einer Cellulosemultifaser dieser Festigkeit wird ein Verstärkungsmaterial geschaffen, bei der die oben angegebene Vereinbarkeit verbessert ist.

Dies hat weitergehende Vorteile dahingehend, dass beispielsweise andernfalls bei einem herkömmlichen Faseraufbau aus dem Stand der Technik, etwa im Falle der Anwendung als Reifenverstärkungsgewebe, zum Erreichen eines höheren Ermüdungswiderstands beispielsweise eine höhere Zwirnung (angegeben in turns per meter [tpm]) herangezogen werden müsste. Eine solche erhöhte Zwirnung würde sich jedoch negativ auf die Kordfestigkeit auswirken und müsste mit einer entsprechend höheren Korddichte kompensiert werden. Bei dem erfindungsgemäßen Aufbau ist eine solche Konstellation jedenfalls in diesem Maße nicht mehr erforderlich, und somit kann eine dann mit der Erhöhung der Korddichte einhergehende Erhöhung des Flächengewichts einer Lage eines solchen Verstärkungsmaterials verringert oder vermieden werden und letztlich dadurch eine Erhöhung des Gesamtgewichts beispielsweise eines Reifens sowie der negative Einfluss auf dessen Rollwiderstand vermieden werden.

Die Bedeutung des Ausdrucks "Einzelfaserstärke" bzw. "Faserstärkenwert" ist unabhängig von der Querschnittsform, etwa einer runden Querschnittsform oder einer von der Kreisform abweichenden Querschnittsform und ist die eines "effektiven" Durchmessers, d.h. des Durchmessers einer Kreisfläche mit demselben Flächeninhalt wie die Fläche der formmäßig abweichenden Querschnittsform. Relevant ist diesbezüglich somit der Einzelfasertiter bzw. dessen Verteilung/Verteilungsfunktion.

In einer bevorzugten Ausführungsform unterscheiden sich die Mittelwerte der Module der Einzelfasern der Multifaser um weniger als 10 %, bevorzugt weniger als 8 %, insbesondere weniger als 5 %, gemessen bei 1 % Dehnung. Dies verleiht der Cellulosemultifaser, die durch ihren Aufbau aus dem Monomer Glukose bereits einen grundlegenden Grad an Homogenität aufweist, keine übermäßigen Differenzen der Dehnungseigenschaften ihrer Einzelfasern.

In einer erfindungsgemäßen Ausführungsform weist der Aufbau der Multifaser eine aus einem Erspinnen ihrer Einzelfasern aus einer Spinnmasse der gleichen Spinnmassenrezeptur resultierende stoffliche Homogenität auf, insbesondere ist er aus derselben Spinnmasse ersponnen. Dadurch werden die Homogenitätseigenschaften stofflicher Art weiter verstärkt und eine zufriedenstellende Vereinbarkeit von Festigkeit und Ermüdungsverhalten erreicht.

In einer zweckmäßigen Ausgestaltung weist der Aufbau der Multifaser eine aus einem Erspinnen ihrer Einzelfasern in demselben Spinnprozess resultierende intrinsische Homogenität auf. Auf diese Weise lässt sich die Multifaser zum einen einfach herstellen, zum anderen wird man unabhängiger von etwaigen unterschiedlichen Zuständen herangezogener Spinnmaschinen.

Erfindungsgemäß ist der Variationskoeffizient der Verteilung größer als 1/27, bevorzugt als 1/21, insbesondere als 1/17. Bei einer dermaßen erhöhten strukturellen Inhomogenität ergibt sich eine zufriedenstellende Verbesserung, insbesondere im fatigue-Verhalten. Dagegen ist erfindungsgemäß der Variationskoeffizient der Verteilung kleiner ist als drei Siebtel, bevorzugt kleiner als zwei Siebtel, weiter bevorzugt kleiner als ein Fünftel, insbesondere kleiner ist als ein Siebtel. Dadurch wird ein nicht zu starkes Überwiegen der strukturellen Inhomogenität gegenüber den Homogenitätseigenschaften erreicht, was zu insbesondere einer zufriedenstellenden Tendenz im Festigkeitsverhalten führt. Der Variationskoeffizient der Verteilung ist dabei definiert als der Quotient aus der Quadratwurzel des gemittelten quadratischen Abstandes der Verteilung (d. h. der Einzelwerte der Verteilungsfunktion) von ihrem Mittelwert und diesem Mittelwert.

In einer besonders bevorzugten Gestaltung handelt es sich bei der Multifaser um ein cellulosisches Multifilament, deren Festigkeitswerte nach ASTM D 855M zumindest 40cN/tex beträgt, bevorzugt mindestens 45cN/tex, insbesondere wenigstens 50 cN/tex.

Zudem ist vorgesehen, dass der Gesamttiter des cellulosischen Multifilaments (somit der Kapillartiter aller Einzelfilamente) wenigstens 200 dtex beträgt, bevorzugt wenigstens 400 dtex, insbesondere wenigstens 840 dtex. Die Gesamtzahl der Einzelfilamente in der Multifaser soll bevorzugt wenigstens 80 betragen, weiter bevorzugt wenigstens 160, und insbesondere wenigstens 300. Andererseits ist vorgesehen, dass diese Gesamtanzahl bevorzugt weniger als 2400 beträgt, weiter bevorzugt weniger als 2000, insbesondere weniger als 1600.

In einer bevorzugten Ausführungsform weist die Verteilung wenigstens zwei signifikante relative Maxima auf und könnte insbesondere genau zwei solche Maxima aufweisen. Es sind somit mit anderen Worten zumindest zwei Populationen von Einzelfilamenttitern in der Multifaser vorgesehen. Dabei sollten sich die Einzelfilamenttiter bevorzugt um mehr als 10 % voneinander unterscheiden. In einer möglichen Variante ist die Verteilung um den Durchschnittswert der jeweiligen Population scharf zentriert, so dass sich die Einzelfilamenttiter der jeweiligen Population um weniger als 5 % unterscheiden. Signifikant bedeutet hier, dass die in einem Bereich +/- 5 % um das Minimum summierte Dichte der Verteilung wenigstens 10 % des Gewichts der Verteilung ausmacht.

Erfindungsgemäß ist der mittlere in dtex bemessene Einzelfilamenttiter der Verteilung größer als 1,5, bevorzugt größer als 1,8, insbesondere größer als 2,0. Des weiteren ist dieser mittlere Einzelfilamenttiter der Verteilung bevorzugt kleiner als 4,0, weiter bevorzugt kleiner als 3,3, insbesondere kleiner als 2,8, und besonders bevorzugt kleiner als 2,6. Diese Größenordnungen erlauben ein besonders wirksames Zusammenspiel der strukturellen Inhomogenität und den Homogenitätseigenschaften, insbesondere der intrinsisch-stofflichen Homogenität. In der Variante der zwei in der Verteilung erkennbaren Maxima, um die die Verteilung insbesondere scharf zentriert ist, kann bevorzugt der Quotient aus dem Abstand der Faserstärke der beiden Maxima und der gemittelten Einzelfaserstärke der Verteilung größer sein als 1/15, bevorzugt größer als 1/13, insbesondere größer als 1/11, und ist insbesondere kleiner als 1, bevorzugt kleiner als 0,9, insbesondere kleiner als 0,8.

Ebenfalls gedacht ist als Bestandteil des Verstärkungsmaterials an eine aus wenigstens aus zwei Multifasern gebildete, insbesondere gezwirnte Multifaserstruktur, bei der wenigstens ein Bestandteil in Form einer Multifaser nach einem der o.g. Aspekte gebildet ist.

Ein solcher Kord weist bevorzugt ein Twistlevel (in [tpm]) von wenigstens 360, weiter bevorzugt wenigstens 380, insbesondere wenigstens 400 auf. Einerseits wird es bevorzugt, dass die Verzwirnung in selbiger Maßeinheit geringer ist als 520, bevorzugt geringer als 480, weiter bevorzugt geringer als 460, insbesondere geringer als 440. Es können jedoch auch Verzwirnungsniveaus von weniger als 430, und insbesondere 420 oder weniger herangezogen werden, bei aufgrund der erfindungsgemäßen Kombination aus struktureller Inhomogenität und den Homogenitätseigenschaften, insbesondere der intrinsisch-stofflichen Homogenität noch guter Vereinbarkeit von Festigkeit und Ermüdungsverhalten.

Eine zweckmäßige Gestaltung eines derartigen Kords wird erreicht, wenn wenigstens zwei, insbesondere genau zwei Multifasern mit den o.g. Eigenschaften enthalten sind. Diese beiden Multifilamentbestandteile können dabei bevorzugt die gleiche struktureller Inhomogenität aufweisen. Des Weiteren wird bevorzugt, dass beide eine durch Erzeugung aus der gleichen Spinnmasse bewirkte gleiche stoffliche Homogenität aufweisen.

Das Verstärkungsmaterial kann in Form eines linearen Gebildes oder auch eines Flächengebildes vorliegen, bei einer gezwirnten oder ungezwirnten Multifaserstruktur nach einem der obigen Aspekte. Des Weiteren kann das Verstärkungsmaterial noch weitere Garne aufweisen, die kombiniert enthalten sind, von denen als Beispiel Garne aus regenerierter Cellulose unabhängig von deren Einzeltiterverteilung herangezogen werden könnten, Cellulosegarne mit z.B. einer Kristallinität von beispielsweise > 40 % bzw. hohen Festigkeiten von 35cN/tex oder höher (auch ohne die strukturelle Inhomogenität), aliphatische und aromatische Polyamide, Polyimide oder Polyester (PEN, PAN, PEEK, PEF) sowie Polyketone. Kombinationsmöglichkeiten bestehen zudem mit Fasern/ Garnen aus Glas, Stahl, Basalt oder auch Kohlenstoff.

Die erfindungsgemäßen Verstärkungsmaterialien zeichnen sich aufgrund der enthaltenen, eine strukturelle Inhomogenität und die Homogenitätseigenschaften, insbesondere die intrinsisch-stoffliche Homogenität kombinierende cellulosische Multifaser gegenüber herkömmlichen Verstärkungsmaterialien einer Vergleichsreferenz durch einen um wenigstens 15 % geringeren relativen Festigkeitsverlust im Shoe-Shine-Fatigue-Test aus.

Dabei ist die Referenz dadurch definiert, dass sie bis auf die strukturelle Inhomogenität der Multifaser hinsichtlich ihrer Erzeugung und Struktur dem erfindungsgemäßen Verstärkungsmaterial gleich ist. Anstelle der erfindungsgemäßen Multifaser enthält das Referenzmaterial somit eine Multifaser mit einer Verteilung ihrer Einzelfaserstärke bzw. Einzelfasertiter mit scharfer Zentrierung um eine einzelne Faserstärke, bei ansonsten vorhandenen Homogenitätseigenschaften, etwa gleicher intrinsisch-stofflicher Homogenität, gleichem Gesamttiter der Multifaser sowie einer um nicht mehr als 10 % abweichenden Gesamtzahl an Einzelfasern der Multifaser. Die erreichbare Verringerung des Festigkeitsverlusts bezüglich der Referenz beträgt sogar mehr als 20 %.

In verfahrenstechnischer Hinsicht stellt die Erfindung bereit ein Verfahren mit den Merkmalen des Anspruchs 14. Dies ist ein Verfahren, bei dem u.a. die cellulosische Multifaser mit einer Festigkeit (konditioniert) von wenigstens 35cN/tex und mit einem durch Abweichung der Verteilung ihrer Einzelfaserstärken von einer scharfen Zentrierung um einen einzelnen Faserstärkenwert erzeugten strukturellen Inhomogenität aufweisenden Aufbau bereitgestellt wird. Zudem wird der Multifaser durch Erspinnen ihrer Einzelfasern aus derselben Spinnmasse und insbesondere in demselben Spinnprozess eine stoffliche, insbesondere intrinsisch-stoffliche Homogenität ihres Aufbaus verliehen.

Die Vorteile des erfindungsgemäßen Verfahrens ergeben sich aus den oben erläuterten Vorteilen des erfindungsgemäßen Verstärkungsmaterials.

In einer besonders bevorzugten Verfahrensgestaltung wird die strukturelle Inhomogenität der Multifaser erreicht durch Verwendung einer Spinndüse mit Spinnlöchern, deren Durchmesserverteilung von einer scharfen Zentrierung um einen Einzeldurchmesser abweicht. Bevorzugt werden dabei für diese Verteilung der Düsendurchmesser Verteilungen mit Variationskoeffizienten in den oben hinsichtlich der Einzelfaserdurchmesser/ Einzelfasertiter bezogenen Verteilungen herangezogen. Dabei wird ausgenutzt, dass im Bereich der typischen Spinnprozessparameter im Wesentlichen direkte Proportionalität der Einzelfasertiter vom Öffnungsquerschnitt des jeweiligen Düsenlochs der Spinndüse besteht.

In einer besonders bevorzugten Gestaltung ist vorgesehen, dass die Düsenöffnungen eine konzentrische Anordnung bilden. Dabei ist insbesondere vorgesehen, dass Düsenöffnungen mit größeren Durchmessern zentral und Düsenöffnungen mit kleineren Durchmessern peripher um die der größeren Durchmesser herum angeordnet sind. Dies erhöht die Qualität der intrinsisch-stofflichen Homogenität.

Bevorzugt ist vorgesehen, dass sich der Durchmesser der kleineren Düsenöffnungen von jenen der größeren Düsenöffnungen um wenigstens 5 %, bevorzugt um wenigstens 10 % und insbesondere um wenigstens 15 % unterscheidet. Zweckmäßig ist dabei vorgesehen, dass die nominalen Einzeldurchmesser der Düsenöffnungen wenigstens 40 µm, weiter bevorzugt wenigstens 50 µm betragen und geringer sind als 140 µm, insbesondere geringer als 100 µm. Für den Anwendungsfall einer Verteilung mit zwei Populationen (zwei scharf zentrierte Maxima in der Verteilungsfunktion) wird es bevorzugt, dass der Anteil der Gesamtfläche der Düsenöffnungen mit den kleinen Durchmessern an der Gesamtfläche aller Düsenöffnungen der Spinndüse bei wenigstens 10 %, bevorzugt wenigstens 20 %, insbesondere wenigstens 35 % liegt, während dieser Anteil bevorzugt geringer ist als 90 %, weiter bevorzugt geringer als 80 %, insbesondere geringer als 65 %.

Weitere Merkmale, Einzelheiten und Vorteile der Erfindung ergeben sich aus der nachfolgenden Beschreibung mit Bezug auf die beigefügten Figuren, von denen
Fig. 1 eine im Spinnprozess einsetzbare Düse zeigt,
Fig. 2 schematisch den Aufbau eines Fatiguemusters zeigt, und
Fig. 3 eine vergleichende Darstellung einer erfindungsgemäßen Variante und einer Referenz aus dem Stand der Technik bezüglich Festigkeitsverlust in Abhängigkeit der Verzwirnung ist.

Zunächst wird kurz auf die Herstellung einer für die Multifaser des Verstärkungsmaterials geeigneten spinnfähigen Masse eingegangen und dazu das Viskose-Verfahren, insbesondere modifizierte Viskose-Verfahren herangezogen. Dabei wird aus geeigneten Zellstoffen, welche einen alpha-Cellulosegehalt von größer als 94 %, bevorzugt von größer als 97 % besitzen sollten, durch Alkalisierung in Natronlauge, Abpressen und Vorreife, Sulfidierung mit CS₂ und Lösen in Natronlauge, anschließender Filtration und Entgasung sowie Reifung einer spinnfähigem Viskoselösung hergestellt.

Diese Lösung wird durch Spinndüsen mit einer Mehrzahl von Öffnungen gepumpt, und in einer Abfolge von zumindest einem Fällungs- und zumindest einem Regenerationsbad zu Viskose-Filamenten koaguliert und regeneriert. Abhängig von den gewünschten mechanischen Eigenschaften kann das Garn sofort säurefrei gewaschen (PH > 6), aviviert und getrocknet werden oder aber unter leicht sauren Bedingungen (< PH 6) für mehrere Stunden nachgereift werden, bevor es in einem separaten Prozessschritt nochmals verstreckt, säurefrei gewaschen, aviviert und getrocknet wird. Letztere mehrstufige Prozessvariante kommt dabei für sogenannte "Super 3"-Garne zur Anwendung.

Bei dem Beispiel des modifizierten Viskoseverfahrens können sowohl kontinuierliche Spinnverfahren ("Continue-Verfahren") als auch nicht-kontinuierliche Spinnverfahren wie beispielsweise das Topfspinnverfahren oder das Spulenspinnverfahren zur Anwendung kommen, diesbezüglich ist die Erfindung nicht weitergehend eingeschränkt.

Auch ist die Erfindung nicht auf das oben erläuterte Beispiel des modifizierten Viskose-Verfahrens eingeschränkt. So können allgemein Regeneratcellulose-Prozesse, die auf wässriger Lösung basieren, neben dem Viskose- auch das Carbamatverfahren herangezogen werden, wie auch sogenannte Direktlöseverfahren, deren Basis organische Lösungsmittel (NMMO Lyocell-Prozess) oder ionische Flüssigkeiten bilden, herangezogen werden.

Besonders bevorzugt wird somit in Abhängigkeit vom Spinnverfahren die chemisch derivatisierte Cellulose oder in einem Lösungsmittel gelöste underivatisierte Cellulose durch eine Spinndüse gepumpt, deren Düsenöffnungen beispielsweise im Boden der Düse angeordnet sind.

Allerdings weichen die Düsenöffnungen der Spinndüse im Gegensatz zu herkömmlich hierzu herangezogenen Spinndüsen, bei denen die Düsenöffnungen zur Gleichmäßigkeit des Herstellungsverfahrens jedenfalls im Rahmen der Herstellungstoleranzen gleich ausgeführt sind, von einem scharfen zentrierten um einen einzelnen Durchmesserwert ab. Unter Ausnützung des Zusammenhangs zwischen den Düsenöffnungsquerschnitt und dem Kapillartiter der Einzelfilamente wird somit ein mittels dieser Spinndüse hergestelltes Multifilament hoher Festigkeit mit kombinierter struktureller Inhomogenität und stofflichintrinsischer Homogenität erreicht: Konkret werden im Folgenden Ausführungsbeispiele 1, 2 und 3 beschrieben.

Allen Ausführungsbeispielen ist hier gemein, dass eine spinnfähige Viskoselösung (7 % Cellulose, Viskosität von 130 kfs, 13.2 Grad Hottenroth) mit 3,0 bis 4,5 bar durch eine Spinndüse mit einem Gesamtdurchmesser von 12,5 mm gepumpt wurde. Sie unterscheiden sich jedoch im Aufbau der im Spinnverfahren herangezogenen Spinndüse.

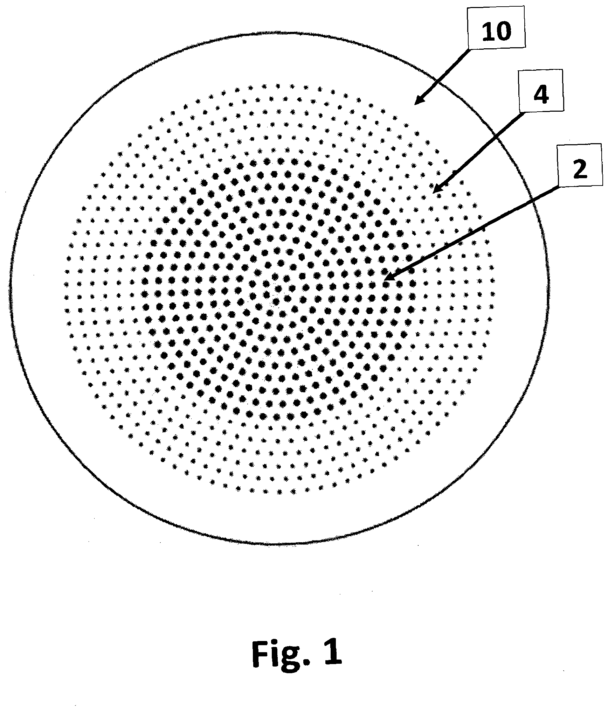

So weist die Spinndüse 10 im ersten Ausführungsbeispiel 847 Düsenlöcher auf, von denen 347 Öffnungen 2 mit einem Durchmesser von jeweils 60µm radial vom Mittelpunkt der Düse ausgehend in 11 inneren konzentrischen Kreisen angeordnet wird. Die verbleibenden 500 Öffnungen 4 sind in 6 größeren dazu konzentrischen Kreisen angeordnet und weisen einen Durchmesser von jeweils 50µm auf. Diese Öffnungsanordnung ist in Fig. 1 dargestellt.

Im zweiten Ausführungsbeispiel enthält die Spinndüse 667 Öffnungen, nämlich 67 innen angeordnete Öffnungen mit einem Durchmesser von 75µm und 600 äußere Düsenlöcher mit einem Durchmesser von 60µm.

Im dritten Ausführungsbeispiel sind 569 Öffnungen vorgesehen, von denen 284 innere Öffnungen einen Durchmesser von 75µm aufweisen, und 285 Öffnungen einen Durchmesser von 60µm.

Jeweils wieder für alle Ausführungsbeispiele 1 bis 3 gleich erfolgte nach dem Durchgang durch die Spinndüse das Koagulieren und anschließende Verstrecken. Das Koagulations-Spinnbad enthielt dabei 80g/l Schwefelsäure, 61g/l Zinksulfat und durch Hinzugabe von Na₂SO₄ wurde eine Dichte von 1200g/l erreicht. Die Temperatur des Koagulations-Spinnbads lag im Bereich von 55°C bis 63°C, die des Verstreckungsbades im Bereich von 90 bis 94°C. Im Verstreckungsbad, das 55g/l Schwefelsäure enthielt, wurde um 106% verstreckt, der Endabzug erfolgte mit einer Geschwindigkeit von 65 m/min. Anschließend wurde mit leicht basischem Wasser gewaschen, aviviert, getrocknet und aufgewickelt. Die Messung des Moduls der Einzelfasern wurde an Stapelfasern der Multifaser nach den Vorschriften der BISFA (BISFA, Testing methods viscose, modal, lyocell and acetate staple fibers and tows, 2004) durchgeführt.

Zur Feststellung der sich aus Verstärkungsmaterialien mit diesen Multifilamenten ergebenden mechanischen Eigenschaften für die angedachten Anwendungen, beispielsweise als Reifenkord, wurde das Multifilamentgarn für zumindest 24 Stunden konditioniert, bevor es auf einem Direktcabler (Alma-Sauerer DC2) mit 5500rpm zu einem Kord 1840x2 kabliert wurde.

Anschließend erfolgte ein Dippen in einem für Rayonkorde üblichen (siehe etwa "Handbook of Rubber bonding, Bryan Crouter, Rapra Technology Ltd, 2003, Seiten 241 ff."), einbadigen RFL-dip mit einem Total solid Content von 22% mit 18m/min, hier auf einer Labor-Single-end-cord Anlage von C.A. Litzler Co., Inc. (Cleveland Ohio) und ein Ondulieren bei 150°C für 100 sec.

Für den weiter unten angegebenen Vergleich der durchgeführten Prüfungen auf mechanische Eigenschaften gilt dann folgende Zuordnung:
Ausführungsbeispiel 1 - Cord A
Ausführungsbeispiel 2- Cord B
Ausführungsbeispiel 3 - Cord C.

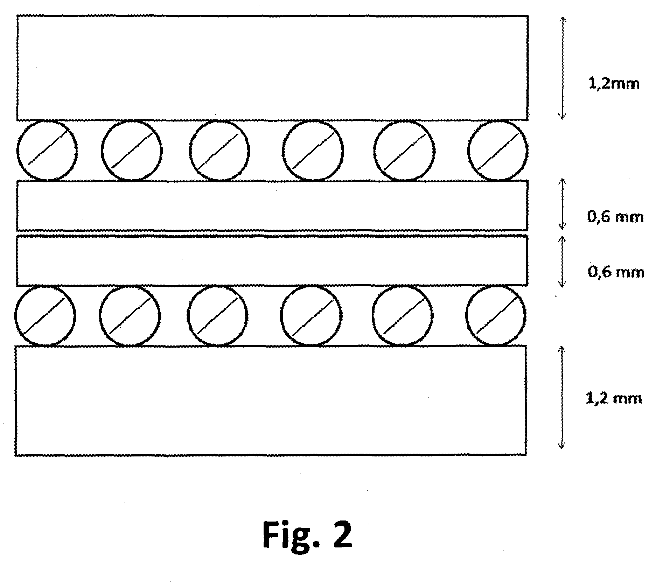

Im Folgenden wird die Auswertung beschrieben, mit der Fatigue-Eigenschaften der untersuchten Korde an Hand des Festigkeitsverlusts als Vergleichsparameter durchgeführt wurden. Dabei wurde wie folgt vorgegangen:
Die Fatigue-Probe wurde in einem in Fig. 2 dargestellten Aufbau bereitgestellt und ist 86mm lang und 1 inch (25,4mm) breit. Die obere Schicht ist 1,76 x2 tex, Teijin T100 Cord mit 350 tpm. Die innere Schicht ist der zu untersuchende Kord, im gegebenen Fall 1840x2 dtex. Sowohl die Oberschicht als auch die innere Schicht haben 22 ends/inch und sind RFL gedippt. Die korrekte Einbettung der Probenkorde nach Vulkanisation - die Vulkanisationsbedingungen sind auf die gewählte Gummimischung abzustellen - wurde mittels eines adaptierten Peel-tests ermittelt und muss zumindest 80% Coverage betragen. Der Fatigue-Versuch wurde auf einer BSC-2, 2-head shoe-shine-Maschine von Bogimac Society (Belgien) durchgeführt. Die gewählten Versuchsbedingungen waren: 400N Zug, 550rpm, 1-inch wheel, 6h Versuchsdauer. Die Temperatur des Probenkörpers erreichte während des Versuches ca. 60-70°C. Pro Versuchskord wurden 3 bis 5 Probenkörper dem Fatigue-test unterzogen. Um offensichtliche Inhomogenitäten in der auf den Probekörper einwirkenden Zug und Druckkräfte zu vermeiden - gegen den Rand fällt der Festigkeitsverlust geringer aus - wurden für die Versuchsauswertung lediglich die Festigkeitswerte der fünf rechts und links von der Probenmitte liegenden Korde herangezogen. Für die dabei herangezogenen Testverfahren und Messmethoden gelten im übrigen Dynamometric testing D76 / D2256, Torsion D1423, Linear Density D1907, Strip test Hot Conti method D4393, Strip test Hot Michelin method D4393.

Die Ergebnisse für den dieses Fatigue-Verhalten kennzeichnenden Festigkeitsverlust ist in der fünften Spalte der nachfolgenden Tabelle 1 angegeben, in der die Korde A, B und C in den Zeilen 2-4 wiedergegeben sind. Der Festigkeitsverlust liegt im Bereich von 22-28 %. Welch gutes Ermüdungsverhalten hier erfindungsgemäß erreicht wird, bei den gleichzeitig erhaltenden Festigkeiten (siehe Greige cord Breaking Strength bzw. Unflexed cord Breaking Strength, die in den Spalten 2 und 3 der Tabelle 1 angegeben sind), ergibt sich unter Betrachtung von Vergleichsbeispielen.

So wurde für ein erstes Vergleichsbeispiel vorgegangen wie bei den Ausführungsbeispielen 1 bis 3), allerdings mit einer Spinndüse mit 830 Düsenlöchern mit identischem Durchmesser von 60µm.

In einem zweiten Ausführungsbeispiel wurde analog zu den Ausführungsbeispielen 1 bis 3 vorgegangen, allerdings mit einer Spinndüse mit 1000 Düsenlöchern mit einem identischen Durchmesser von 50µm.

Im dritten Vergleichsbeispiel wurde analog zu den Ausführungsbeispielen 1 bis 3 ein cellulosisches Multifilament unter Verwendung einer Spinndüse mit 420 Öffnungen mit identischem Durchmesser von 60µm versponnen. Im Gegensatz zu den Vergleichsbeispielen 1 und 2, bei denen wie bei den Ausführungsbeispielen 1 bis 3 der gedippte Kord hergestellt wurde aus zwei identischen gemäß dem jeweiligen Beispiel hergestellten Multifilamenten, wurde im dritten Vergleichsbeispiel der Kord aus dem so hergestellten Cellulose-Multifilament (Ply) 1840f420 und einem Multifilament des zweiten Vergleichsbeispiels (Ply) 1840f1000 produziert. Der nominale Einzelfilamenttiter des Kordes (Gesamttiter /Anzahl Einzelfilamente) liegt bei 2,5 dtex.

Für die Darstellung in Tabelle 1 gilt dabei folgende Zuordnung für die Vergleichsbeispiele:
Vegleichsbeispiel 1 - Cord D
Vegleichsbeispiel 2 - Cord E
Vegleichsbeispiel 3 - Cord F (Hybrid)

**Tabelle 1: Übersicht Kordeigenschaften und Festigkeitsverlust**

| **Konstruktion** | **Greige cord Breaking strength [N]** | **Unflexed cord Breaking Strength [N]** | **Nominal twist [tpm]** | **Strength loss** | **Filament number/ hole size [µm]** | **Nominal titer [dtex]** |
|---|---|---|---|---|---|---|
| **Cord A 1840f847x2** | **181,7** | **156** | **420** | **28% (1% StdDv.)** | **491/50** | **2,17** |
| | | | | | **356/60** | |
| **Cord B 1840f667x2** | **178,5** | **155,2** | **420** | **22% (2% StdDv.)** | **600/60** | **2,76** |
| | | | | | **67175** | |
| **Cord C 1840f569x2** | **165,3** | **164,2** | **420** | **25% (3% StdDv.)** | **285/60** | **3,23** |
| | | | | | **284/75** | |
| **Cord D 1840f830x2** | **187,7** | **155,5** | **420** | **47% (9% StdDv.)** | **830/60** | **2,17** |
| **Cord E 1840f1000x2** | **183,6** | **157,6** | **420** | **40% (4% StdDv.)** | **1000/50** | **1,84** |
| **Cord F - Hybrid 1840f1000/ 1840f420** | **178,2** | **145,5** | **420** | **52% (3% StdDv.)** | **1000/50** | **2,5** |
| | | | | | **420/60** | |

Sämtliche Vergleichsbeispiele 1, 2 und 3 mit Corden D, E und F zeigen ein signifikant schlechteres Fatigue-Verhalten in Form eines erheblich höheren Festigkeitsverlusts (40% - 52%) auf. Aus Tabelle 1 zeigt sich somit das stark verbesserte Fatigue-Verhalten derjenigen Garne, die Multifilamente mit struktureller Inhomogenität und den in diesen Ausführungsbeispielen durch das Erspinnen aus derselben Spinnmasse und im selben Spinnprozess definierten intrinsisch-stofflichen Homogenität aufweisen, insbesondere im deutlich geringeren Festigkeitsverlust im Vergleich zu den Vergleichsbeispielen 1 und 2, bei denen eine strukturelle Inhomogenität nicht gegeben ist. Bei konkretem Vergleich des ersten Ausführungsbeispiels (Cord A) und des ersten Vergleichsbeispiels (Cord D) ist offensichtlich, dass trotz gleichen Nominaltiters und ansonsten vergleichbaren mechanischer Eigenschaften Cord A einen signifikant höheren Ermüdungswiderstand aufweist. Dies ist auf die strukturelle Inhomogenität der Multifilamente zurückzuführen, aus denen Cord A gebildet ist. Ein Vergleich mit Vergleichsbeispiel 3 (Cord F) zeigt dagegen, dass das zuvor der im dritten Vergleichsbeispiel erzeugte Hybridkord; garnbezogen eine strukturelle Inhomogenität dahingehend aufweist, dass Kapillartiter von 1,8 dtex und Kapillartiter von 4,4 dtex vorhanden sind. Diese sind jedoch den jeweiligen Multifilamentgarnen separat zugeordnet, die erfindungsgemäßen Homogenitätseigenschaften (grundlegend bzw. auch die stofflichintrinsische Homogenität) ist nicht gegeben. Es ist erkennbar, dass mit Cord F keine Verbesserung des Ermüdungsverhaltens erreicht wird.

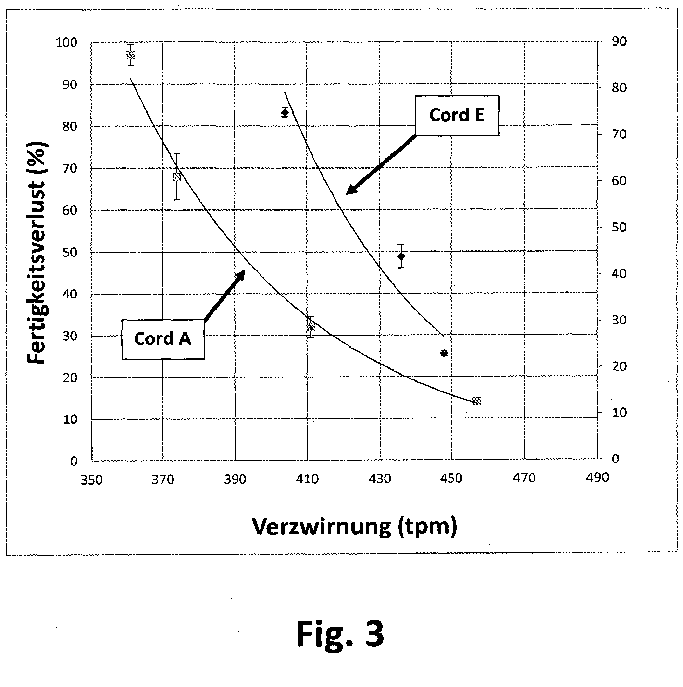

In Fig. 3 ist sowohl für Cord A (erstes Ausführungsbeispiel) als auch für Cord E (Vergleichsbeispiel 2) der Festigkeitsverlust in Abhängigkeit von der Zwirnung dargestellt. Wiederum erkennt man das signifikant verbesserte Ermüdungsverhalten gegenüber einem unter den gleichen Spinnbedingungen versponnenen Referenzkord, welcher keine Multifilamente mit struktureller Inhomogenität aufweist. Man erkennt deutlich, dass zum Erreichen des gleichen Levels an Festigkeitsverlust für Cord A eine geringere Zwirnung ausreichend ist. Aufgrund der oben erläuterten Zusammenhänge lassen sich somit durch Reduktion der Zwirnung Textilflächengebilde realisieren, die gegenüber herkömmlichen Flächengebilden bei gleichen Flächengebilden eine höhere spezifische Festigkeit aufweisen, ohne dass es zu einer signifikanten Verschlechterung des Ermüdungswiderstandes kommt.

Die Erfindung ist nicht auf den in den Ausführungsbeispielen einzeln gezeigten Merkmalen eingeschränkt. Somit können die Merkmale nach der vorstehenden Beschreibung wie den nachstehenden Ansprüchen einzeln und in Kombination für die Verwirklichung der Erfindung in ihren verschiedenen Ausführungsformen wesentlich sein.

So sind insbesondere die in dem Ausführungsbeispiel herangezogenen kreisförmigen Düsenöffnungen eine bevorzugte Variante, die diesen Öffnungen können jedoch auch in anderen geometrischen Querschnittsformen ausgeführt werden. Auch ist die in den Ausführungsbeispielen beschriebene Realisierung der strukturellen Inhomogenität über zwei Einzelfilamenttiter-Populationen über die Verwendung zweier unterschiedlicher Düsenöffnungen-Durchmesser ebenfalls nur eine von mehreren denkbaren Gestaltungen, beispielsweise könnten auch drei oder mehr verschiedene Düsenöffnungs-Durchmesser zur Anwendung kommen und eine höhere Zahl von Einzelfilamenttiter-Populationen erzeugt werden.

Auch können zur Herstellung der erfindungsgemäßen Multifilamente neben dem beschriebenen Regeneratverfahren auch Direktlöseverfahren eingesetzt werden, bei denen die Gewinnung cellulosischer Fasern aus Lösungen von tertiären Aminoxiden, wie N-Methylmorpholin-N-oxid (NMMO) oder ionischen Flüssigkeiten (ionic liquids) stattfindet.

Das erfindungsgemäße Verstärkungsmaterial unterliegt in der Form seiner Anwendung keinen besonderen Einschränkungen. Es kann dabei in dem Fachmann bekannten Ausprägungen vorliegen, nebst als Kord bzw. einen Kord enthaltendes Flächengebilde insbesondere auch als Garn, oder als Kurzfaserschnitt. Des Weiteren ist das Verstärkungsmaterial bevorzugt für synthetische und natürliche Elastomere einsetzbar, es ist jedoch auch für andere Materialien (synthetische oder auf Basis nachwachsender Rohstoffe) geeignet, z.B. für thermoplastische oder thermofixierende Kunststoffe. Beispiele für derartige Materialien sind u.a. in WO 2012017034 angegeben, und umfassen insbesondere Naturkautschuk, andere Polyisoprene, Poly(butadiene), Polyisobutylene, Butylkautschuk, Poly(butadien-co-styrole), Poly(butadiencoacrylnitril)e, Poly(ethylen-co-propylen)e, Poly(isobutylen-co-isopren)e, Poly(chloroprene), Polyacrylate, Polyurethane, Polysulfide, Silikon, Polyvinylchloride, Poly(etherester), vernetzte ungesättigte Polyester, Epoxidharze oder Mischungen davon.

**Tabelle 1: Übersicht Kordeigenschaften und Festigkeitsverlust**

| **Konstruktion** | **Greige cord Breaking strength [N]** | **Unflexed cord Breaking Strength [N]** | **Nominal twist [tpm]** | **Strength loss** | **Filament number/ hole size [µm]** | **Nominal titer [dtex]** |
|---|---|---|---|---|---|---|
| **Cord A 1840f847x2** | **181,7** | **156** | **420** | **28% (1% StdDv.)** | **491/50** | **2,17** |
| | | | | | **356/60** | |
| **Cord B 1840f667x2** | **178,5** | **155,2** | **420** | **22% (2% StdDv.)** | **600/60** | **2,76** |
| | | | | | **67/75** | |
| **Cord C 1840f569x2** | **165,3** | **164,2** | **420** | **25% (3% StdDv.)** | **285/60** | **3,23** |
| | | | | | **284/75** | |
| **Cord D 1840f830x2** | **187,7** | **155,5** | **420** | **47% (9% StdDv.)** | **830/60** | **2,17** |
| **Cord E 1840f1000x2** | **183,6** | **157,6** | **420** | **40% (4% StdDv.)** | **1000/50** | **1,84** |
| **Cord F - Hybrid 1840f1000/ 1840f420** | **178,2** | **145,5** | **420** | **52% (3% StdDv.)** | **1000/50** | **2,5** |
| | | | | | **420/60** | |

## Patentansprüche

1. Verstärkungsmaterial, insbesondere für Gummianordnungen, insbesondere in Form einer Reifencordkonstruktion, das eine cellulosische Multifaser mit einer Festigkeit im konditionierten Zustand nach ASTM D 855M von 35 cN/tex oder höher und mit einem eine durch Abweichung der Verteilung ihrer Einzelfaserstärke von einer scharfen Zentrierung um eine einzelne Faserstärke in Form eines Variationskoeffizienten der Verteilung von größer als 1/27 und kleiner als 3/7 erzeugten strukturellen Inhomogenität aufweisenden Aufbau aufweist, und bei dem der Aufbau der Multifaser eine aus einem Erspinnen ihrer Einzelfasern aus einer Spinnmasse der gleichen Spinnmassenrezeptur resultierende stoffliche Homogenität aufweist, wobei die Verteilung wenigstens zwei relative Maxima aufweist und die mittlere in dtex bemessene Einzelfaserstärke der Verteilung größer ist als 1,5.

2. Verstärkungsmaterial nach Anspruch 1, bei dem sich die Mittelwerte der Module der Einzelfasern der Multifaser um weniger als 10%, bevorzugt weniger als 8%, insbesondere weniger als 5% unterscheiden, gemessen bei 1% Dehnung.

3. Verstärkungsmaterial nach Anspruch 1 oder 2, bei dem der Aufbau aus derselben Spinnmasse ersponnen ist.

4. Verstärkungsmaterial nach einem der vorhergehenden Ansprüche, bei dem der Aufbau der Multifaser eine aus einem Erspinnen ihrer Einzelfasern in demselben Spinnprozess resultierende intrinsische Homogenität aufweist.

5. Verstärkungsmaterial nach einem der vorhergehenden Ansprüche, bei dem der Variationskoeffizient der Verteilung größer ist als 1/21, insbesondere als 1/17.

6. Verstärkungsmaterial nach einem der vorhergehenden Ansprüche, bei dem der Variationskoeffizient der Verteilung kleiner ist als zwei Siebtel, weiter bevorzugt kleiner als ein Fünftel und insbesondere kleiner als ein Siebtel.

7. Verstärkungsmaterial nach einem der vorhergehenden Ansprüche, bei dem die mittlere in dtex bemessene Einzelfaserstärke der Verteilung größer ist als 1,8, insbesondere größer ist als 2,0.

8. Verstärkungsmaterial nach einem der vorhergehenden Ansprüche, bei dem die mittlere in dtex gemessene Einzelfaserstärke der Verteilung kleiner ist als 4,0, bevorzugt kleiner ist als 3,3, insbesondere kleiner ist als 2,8 und besonders bevorzugt kleiner als 2,6.

9. Verstärkungsmaterial nach einem der Ansprüche 4 bis 6, bei dem der Quotient aus dem Abstand der Faserstärke der beiden Maxima und der gemittelten Einzelfaserstärken gemessen in dtex der Verteilung größer ist als 1/15, bevorzugt größer als 1/13, insbesondere größer als 1/11, und insbesondere kleiner ist als 1, bevorzugt kleiner als 0,9, insbesondere kleiner ist als 0,8.

10. Verstärkungsmaterial nach einem der vorhergehenden Ansprüche, bei dem die Multifaser als Multifilament vorliegt.

11. Verstärkungsmaterial nach einem der vorhergehenden Ansprüche, mit einer aus wenigstens zwei Multifasern gebildeten, insbesondere gezwirnten Multifilamentstruktur, von deren Multifasern wenigstens eine, insbesondere wenigstens zwei, insbesondere genau zwei die Festigkeit von 35 cN/tex oder höher und sowohl jeweilig die strukturelle Inhomogenität als auch die stoffliche und insbesondere intrinsische Homogenität aufweisen.

12. Verstärkungsmaterial nach Anspruch 11, bei dem wenigstens zwei MultifilamentBestandteile die gleiche strukturelle Inhomogenität aufweisen und insbesondere die gleiche stoffliche Homogenität aufweisen.

13. Verfahren zum Erzeugen eines Verstärkungsmaterials, mit einer cellulosischen Multifaser, bei dem die cellulosische Multifaser mit einer Festigkeit (konditioniert) nach ASTM D 885M von wenigstens 35 cN/tex und mit einem durch Abweichung der Verteilung ihrer Einzelfaserstärken von einer scharfen Zentrierung einen einzelnen Faserstärkenwert in Form eines Variationskoeffizienten der Verteilung von größer als 1/27 und kleiner als 3/7 erzeugten strukturellen Inhomogenität aufweisenden Aufbau bereitgestellt wird, und bei dem der Multifaser durch Erspinnen ihrer Einzelfasern aus einer Spinnmasse der gleichen Spinnmassenrezeptur eine stoffliche Homogenität ihres Aufbaus verliehen wird, wobei die Verteilung wenigstens zwei relative Maxima aufweist und die mittlere in dtex bemessene Einzelfaserstärke der Verteilung größer ist als 1,5.

14. Verfahren nach Anspruch 13, bei dem die Multifaser aus derselben Spinnmasse gesponnen wird.

15. Verfahren nach einem der Ansprüche 13 oder 14, bei dem das hergestellte Verstärkungsmaterial Merkmale einer oder mehrerer der Ansprüche 2 bis 9 aufweist.

16. Gegenstand mit einer Struktur aus synthetischen und/oder natürlichen Elastomeren, und/oder anderen synthetischen Kunststoffen, insbesondere Fahrzeugreifen, bei dem die Struktur durch ein Verstärkungsmaterial nach einem der Ansprüche 1 bis 12 verstärkt ist.

## Claims

1. Reinforcing material, in particular for rubber assemblies, in particular in the form of a tire cord construction, which has a cellulosic multifiber with a strength in conditioned state according to ASTM D 855M of 35 cN/tex or above and having a structure having a structural inhomogeneity generated by a deviation of the distribution of its individual fiber thickness from a sharp centering by an individual fiber thickness in the form of a variation coefficient of the distribution of greater than 1/27 and less than 3/7, and in which the structure of the multifiber has a material homogeneity resulting from spinning its individual fibers out of a spinning mass of the same spinning mass formula, wherein the distribution has at least two relative maxima and the average individual fiber thickness, measured in dtex, of the distribution is greater than 1.5.

2. Reinforcing material according to claim 1, in which the average values of the modules of the individual fibers of the multifibers differ by less than 10%, preferably less than 8%, in particular less than 5%, measured in the case of a 1% stretching.

3. Reinforcing material according to claim 1 or 2, in which the structure is spun from the same spinning mass.

4. Reinforcing material according to any of the preceding claims, in which the structure of the multifiber has an intrinsic homogeneity resulting from a spinning of its individual fibers in the same spinning process.

5. Reinforcing material according to any of the preceding claims, in which the variation coefficient of the distribution is greater than 1/21, in particular than 1/17.

6. Reinforcing material according to any of the preceding claims, in which the variation coefficient of the distribution is less than two sevenths, more preferably less than one fifth and in particular less than one seventh.

7. Reinforcing material according to any of the preceding claims, in which the average individual fiber thickness of the distribution is greater than 1.8, in particular is greater than 2.0.

8. Reinforcing material according to any of the preceding claims, in which the average individual fiber thickness of the distribution is less than 4.0, preferably is less than 3.3, in particular is less than 2.8 and especially preferably is less than 2.6.

9. Reinforcing material according to any of claims 4 to 6, in which the interval from the spacing of the fiber thickness of the two maxima and the averaged individual fiber thicknesses, measured in dtex, of the distribution is greater than 1/15, preferably greater than 1/13, in particular greater than 1/11, and in particular is less than 1, preferably less than 0,9, in particular is less than 0,8.

10. Reinforcing material according to any of the preceding claims, in which the multifiber is present as a multifilament.

11. Reinforcing material according to any of the preceding claims, having a multifilament structure formed, in particular twined, from at least two multifibers, of the multifibers of which at least one, in particular at least two, in particular precisely two have the strength of 35 cN/tex or above, and have both in each case the structural inhomogeneity and the material and in particular intrinsic homogeneity.

12. Reinforcing material according to claim 11, in which at least two multifilament components have the same structural inhomogeneity and in particular have the same material homogeneity.

13. Method for producing a reinforcing material having a cellulosic multifiber in which the cellulosic multifiber is provided having a strength (conditioned) according to ASTM D 855M of at least 35 cN/tex and having a structure having a structural inhomogeneity generated by a deviation of the distribution of its individual fiber thicknesses from a sharp centering by an individual fiber thickness in the form of a variation coefficient of the distribution of greater than 1/27 and less than 3/7, and in which the structure of the multifiber has a material homogeneity of its structure resulting from spinning its individual fibers out of a spinning mass of the same spinning mass formula, wherein the distribution has at least two relative maxima and the average individual fiber thickness, measured in dtex, of the distribution is greater than 1.5.

14. Method according to claim 13, in which the multifiber is spun from the same spinning mass.

15. Method according to any of claims 13 or 14, in which the produced reinforcing material has characteristics of one or several of claims 2 to 9.

16. Object having a structure made of synthetic and/or natural elastomers, and/or other synthetic plastics, in particular vehicle tires, in which the structure is reinforced by a reinforcing material according to any of claims 1 to 12.

## Revendications

1. Matériau de renfort, en particulier pour des ensembles en caoutchouc, en particulier sous la forme d'une construction de nappe tramée pour pneumatiques qui présente une multifibre cellulosique avec une résistance à l'état conditionné selon ASTM D 855M de 35 cN/tex ou plus et avec une structure présentant une hétérogénéité structurelle générée par écart de la répartition de son épaisseur de fibre individuelle d'un centrage net par une épaisseur de fibre individuelle sous la forme d'un coefficient de variation de la répartition de plus de 1/27 et de moins de 3/7, et pour lequel la structure de la multifibre présente une homogénéité de matière résultant d'une filature de ses fibres individuelles à partir d'une masse de filage de la même composition de masse de filage, dans lequel la répartition présente au moins deux maximum relatifs et l'épaisseur de fibre individuelle médiane mesurée en dtex de la répartition est supérieure à 1,5.

2. Matériau de renfort selon la revendication 1, pour lequel les valeurs médianes des modules des fibres individuelles de la multifibre diffèrent de moins de 10 %, de préférence de moins de 8 %, en particulier de moins de 5 %, mesurées à 1 % d'extension.

3. Matériau de renfort selon la revendication 1 ou 2, pour lequel la structure est filée à partir de la même masse de filage.

4. Matériau de renfort selon l'une quelconque des revendications précédentes, pour lequel la structure de la multifibre présente une homogénéité intrinsèque résultant d'un filage de ses fibres individuelles dans le même processus de filage.

5. Matériau de renfort selon l'une quelconque des revendications précédentes, pour lequel le coefficient de variation de la répartition est supérieur à 1/21, en particulier à 1/17.

6. Matériau de renfort selon l'une quelconque des revendications précédentes, pour lequel le coefficient de variation de la répartition est inférieur à deux septièmes, plus préférentiellement inférieur à un cinquième et en particulier inférieur à un septième.

7. Matériau de renfort selon l'une quelconque des revendications précédentes, pour lequel l'épaisseur de fibre individuelle médiane mesurée en dtex de la répartition est supérieure à 1,8, en particulier supérieure à 2,0.

8. Matériau de renfort selon l'une quelconque des revendications précédentes, pour lequel l'épaisseur de fibre individuelle médiane mesurée en dtex de la répartition est inférieure à 4,0, de préférence inférieure à 3,3, en particulier inférieure à 2,8 et le plus préférentiellement inférieure à 2,6.

9. Matériau de renfort selon l'une quelconque des revendications 4 à 6, pour lequel le quotient issu de la distance de l'épaisseur de fibre des deux maximums et des épaisseurs de fibres individuelles médianes mesurées en dtex de la répartition est supérieur à 1/15, de préférence supérieur à 1/13, en particulier supérieur à 1/11 et en particulier inférieur à 1, de préférence inférieur à 0,9, en particulier inférieur à 0,8.

10. Matériau de renfort selon l'une quelconque des revendications précédentes, pour lequel la multifibre se présente comme un multifilament.

11. Matériau de renfort selon l'une quelconque des revendications précédentes, avec une structure de multifilament formée à partir d'au moins deux multifibres, en particulier retors, parmi ses fibres multiples au moins une, en particulier au moins deux, en particulier précisément deux présentent la résistance de 35 cN/tex ou plus et présentent toutes deux respectivement l'hétérogénéité structurelle mais aussi l'homogénéité de matière et en particulier intrinsèque.

12. Matériau de renfort selon la revendication 11, pour lequel au moins deux constituants de multifilament présentent la même hétérogénéité structurelle et présentent en particulier la même homogénéité de matière.

13. Procédé de génération d'un matériau de renfort, avec une multifibre cellulosique, pour lequel la multifibre cellulosique est fournie avec une résistance (conditionnée) selon ASTM D 855M d'au moins 35 cN/tex et avec une structure présentant une hétérogénéité structurelle générée par écart de la répartition de ses épaisseurs de fibre individuelle d'un centrage net par une valeur d'épaisseur de fibre individuelle sous la forme d'un coefficient de variation de la répartition de plus de 1/27 et de moins de 3/7, et pour lequel une homogénéité de matière de sa structure est conférée à la multifibre par filage de ses fibres individuelles à partir d'une masse de filage de la même composition de masse de filage, dans lequel la répartition présente au moins deux maximum relatifs et l'épaisseur de fibre individuelle médiane mesurée en dtex de la répartition est supérieure à 1,5.

14. Procédé selon la revendication 13, pour lequel la multifibre est filée à partir de la même masse de filage.

15. Procédé selon l'une quelconque des revendications 13 ou 14, pour lequel le matériau de renfort fabriqué présente une ou plusieurs des revendications 2 à 9.

16. Objet avec une structure en élastomères synthétiques et/ou naturels et/ou autres matières plastiques synthétiques, en particulier en pneumatiques de véhicule, pour lequel la structure est renforcée par un matériau de renfort selon l'une quelconque des revendications 1 à 12.
